# EUROPÄISCHE PATENTANMELDUNG

(11) **EP 1 424 539 A1**
(43) Veröffentlichungstag der Anmeldung: **02.06.2004**
(21) Anmeldenummer: 03023223.5
(22) Anmeldetag: 13.10.2003
(51) Int. Cl.: G01C 11/02

(54) **Sensoreinrichtung für die Luftbildaufklärung**

(30) Priorität: 28.11.2002 DE 10255635
(71) Anmelder: EMT Ingenieurbüro für Elektro-Mechanische Technologien Dipl.-Ing. Hartmut Euer, 82377 Penzberg (DE)
(72) Erfinder: Euer, Hartmut, Dipl.-Ing., 82393 Iffeldorf (DE); Wernicke, Joachim, Prof. Dr.-Ing., 14167 Berlin (DE)
(74) Vertreter: Volpert, Marcus, Dr.

(57) **Zusammenfassung**

2.1. Bei der Luftbildaufklärung besteht das Problem der Bildgewinnung bei schlechter oder fehlender optischer Sicht. Es ist bekannt, bei der Luftbildaufklärung Radar in den Varianten mit realer oder synthetischer Apertur als elektromagnetisch aktives Verfahren oder Radiometer als elektromagnetisch passives Verfahren einzusetzen. Die neue Sensoreinrichtung soll zusammenhängende Landschaftsstreifen größerer Gesamtstreifenbreite mit hoher geometrischer Auflösung abbilden können.
2.2. Die erfindungsgemäße Sensoreinrichtung weist an Bord des Fluggeräts auf: ein Radiometer zum Abbilden eines inneren Landschaftsstreifens (3) nahe der Flugbahnspur (4) und wenigstens ein Synthetik-Apertur-Radar (SAR) zum Abbilden eines sich an den inneren Landschaftsstreifen (3) des Radiometers nach außen hin anschließenden, äußeren Landschaftsstreifens (5). Vorzugsweise sind zwei SAR vorgesehen, von denen der eine zur einen Seite von der Flugbahnspur (4) und von denen der andere zur anderen Seite von der Flugbahnspur (4) wirkend angeordnet ist.
2.3 Luftbildaufklärung insbesondere bei schlechter oder fehlender optischer Sicht.

## Beschreibung

Die Erfindung bezieht sich auf eine Sensoreinrichtung für die Luftbildaufklärung mit bemannten oder unbemannten Fluggeräten nach dem Oberbegriff des Patentanspruchs 1.

Bei der Luftbildaufklärung besteht das Problem der Bildgewinnung im Falle beispielsweise wetterbedingt schlechter oder fehlender optischer Sicht. Eine solche schlechte oder gar fehlende Sicht kann beispielsweise aufgrund von Wolken, Nebel, Schnee oder Regen aber auch aufgrund von Rauchentwicklung auftreten. Generell besteht das Ziel darin, einen möglichst breiten Landschaftsstreifen um die bodenseitige Flugbahnspur des Fluggeräts lückenlos und mit möglichst hoher geometrischer Auflösung abzubilden. Der Begriff "Landschaft" wird in diesem Zusammenhang und in Verbindung mit der nachfolgend erläuterten Erfindung in einem breiten, umfassenden Sinn als ein Teil oder Bereich der Erdoberfläche unabhängig davon verstanden, ob es sich bei diesem Teil oder Bereich um Boden, ein Gelände oder um Wasser oder Meer handelt.

Aus der Praxis ist bekannt, in solchen Situationen funktechnische Bildaufklärungsmittel einzusetzen. Derartige Bildaufklärungsmittel sind beispielsweise das Radar in den Varianten mit realer und synthetischer Apertur als elektromagnetisch aktives Verfahren und ein Radiometer als elektromagnetisch passives Verfahren. Radar mit realer Apertur und Radiometer arbeiten dabei mit einer sequentiellen, meist streifenweisen Abtastung der Landschaft, wie zum Beispiel des Bodens, während des Überflugs durch die Antennenkeule einer Richtantenne. Mit dem Verfahren des Radars mit synthetischer Apertur, auch Synthetik-Apertur-Radar, nachfolgend abgekürzt SAR, genannt, ist die Erzielung hoher Bildauflösungen möglich.

Jedes der vorgenannten Verfahren zeigt jedoch spezifische Nachteile. So ist das Radar mit realer Apertur durch seine üblichen Betriebswellenlängenbereiche und durch die bei den in Fluggeräten nur kleinen realisierbaren Antennenabmessungen in seiner geometrischen Bildauflösung stark beschränkt. Die auflösbare Objektgröße sinkt dabei proportional zum Objektabstand. Eine Wahl kürzerer Wellenlängen und dadurch verbesserter Bildauflösung verbietet sich jedoch aus Gründen der mit kürzerer Wellenlänge sinkenden Radar-Reichweite infolge der Dämpfung der Radarstrahlung in der Atmosphäre. Außerdem ist das Radar mit realer Apertur durch seine Funkemissionen auffällig. Ein solches Verhalten ist insbesondere bei der militärischen Luftaufklärung unerwünscht.

Das Radiometer nutzt die thermische Eigen-Strahlungsemission der abzubildenden Objekte und die Strahlungsreflexion des thermischen Himmelhintergrundes im elektrotechnischen Höchstfrequenzbereich. Radiometer verwenden meist in vorteilhafter Weise kürzere Betriebswellenlängen als das Radar. Die Bildauflösung mit den bordseitig platzierbaren Antennengrößen ist für die Entdeckung von Bodenobjekten mit bestimmten erwarteten Eigenschaften vielfach ausreichend. Die Bildauflösung ist jedoch zumeist nicht ausreichend für die Erkennung, welcher Art die entdeckten Objekte im Detail sind. Aus geometrischen Gründen liefert das Radiometer maximale Bildauflösungen und maximale Bildkontraste bei der Bildaufnahme in Lotrichtung, d.h. senkrecht zur überflogenen Landschaft. Die Bildauflösungen des Radiometers verschlechtem sich mit zunehmend flacher werdenden Blickwinkeln.

Das SAR erzeugt Luftbilder durch rechnerische Prozessverarbeitung der Landschaftsechos von kohärenter Radarstrahlung, die von einer bordseitigen Senderantenne in einer Richtung etwa senkrecht zur Flugbahn in flachem Winkel in die Landschaft ausgesendet wird. Diese Abbildung kann daher vom Funktionsprinzip her nur in einem zur bodenseitigen Flugbahnspur seitlich parallel versetzten Streifen erfolgen, weshalb für das SAR auch der Begriff Seitensicht-Radar verwendet wird. In Lotrichtung oder nahe der bodenseitigen Flugbahnspur kann das SAR keine Bilder erzeugen. Auch das SAR emittiert Radarstrahlung, wenngleich diese wegen seines zumeist Dauerstrichbetriebs weitaus schwächer ist als diejenige der Radargeräte mit realer Apertur.

Der Erfindung liegt die Aufgabe zugrunde, eine Sensoreinrichtung der eingangs erwähnten Art zu schaffen, welche in der Lage ist, zusammenhängende Landschaftsstreifen größerer Gesamtstreifenbreite mit hoher geometrischer Auflösung abzubilden.

Diese Aufgabe wird erfindungsgemäß durch eine Sensoreinrichtung mit den Merkmalen des Patentanspruchs 1 gelöst.

Vorteilhafte Weiterbildungen sind Gegenstand der Unteransprüche.

Die erfindungsgemäße Sensoreinrichtung ermöglicht die Abbildung einer Gesamtstreifenbreite, welche sich aus dem inneren Landschaftsstreifen und wenigstens einem äußeren Landschaftsstreifen zusammensetzt. Da sich der äußere Landschaftsstreifen an den inneren Landschaftsstreifen anschließt, ergibt sich in dem letztgenannten Fall eine in Bezug auf die Flugbahnspur asymmetrische Landschaftsabbildung. Mit Hilfe einer solchen Sensoreinrichtung kann ein zusammenhängender, lückenloser Landschaftsstreifen in der und um die bodenseitige bzw. landschaftsseitige Flugbahnspur erzeugt werden. Die erfindungsgemäße Sensoreinrichtung ist in der Lage, interessierende Objekte innerhalb der Gesamtstreifenbreite, welche sich, wie zuvor erwähnt, aus dem inneren Landschaftsstreifen und wenigstens einem äußeren Landschaftsstreifen zusammensetzt, beim ersten Überflug zu entdecken und bei Erfordernis in weiteren Vorbeiflügen mit hoher geometrischer Auflösung abzubilden. Die erfindungsgemäße Sensoreinrichtung ist also letztlich ein sogenannter Kombinationssensor aus einem Radiometer und wenigstens einem SAR. Vorteilhaft ist dabei, dass sowohl der Landschaftsbereich um die bodenseitige Flugbahnspur als auch ein seitlich darüber hinaus gehender Bereich abgebildet werden kann, wobei sowohl das Radiometer als auch das SAR in seinem jeweils optimalen Betriebsbereich eingesetzt ist.

Gemäß einer Weiterbildung der Erfindung ist der innere Landschaftsstreifen symmetrisch zur Flugbahnspur ausgebildet, wobei vorzugsweise die Flugbahnspur innerhalb des inneren Landschaftsstreifens liegt. Somit ist, jedenfalls was den inneren Landschaftsstreifen betrifft, eine lükkenlose Abbildung zu beiden Seiten der Flugbahnspur gewährleistet.

Vorteilhafterweise beträgt der Öffnungswinkel zur Abbildung des inneren Landschaftsstreifens maximal ±60° um die Lotrichtung. Damit ist einerseits eine möglichst maximale Bildauflösung des Radiometers im Bereich des inneren Landschaftsstreifens, andererseits zusätzlich eine weitere Abtastung der Landschaft in einem Bereich außerhalb des inneren Landschaftsstreifens möglich.

Gemäß einer anderen Weiterbildung der Erfindung grenzt der äußere Landschaftsstreifen unmittelbar an den inneren Landschaftsstreifen an oder überlappt sich mit letzterem teilweise. Mittels dieser Weiterbildung ist eine lückenlose Abbildung innerhalb der abgetasteten Gesamtstreifenbreite gewährleistet.

Vorteilhafterweise beträgt der Öffnungswinkel zur Abbildung des äußeren Landschaftsstreifens zwischen +10° und + 40° oder zwischen -10° und -40°. Damit es es möglich, innerhalb der Gesamtstreifenbreite eine optimale Abbildung der Landschaft mit möglichst hoher geometrischer Auflösung zu erreichen.

Gemäß einer besonders bevorzugten Ausführungsform sind zwei SAR vorgesehen, von denen der eine zur einen Seite von der Flugbahnspur und von denen der andere zur anderen Seite von der Flugbahnspur wirkend angeordnet ist. Dadurch ergibt sich letztlich eine Gesamtstreifenbreite, bei der ein innerer Landschaftsstreifen mit zwei äußeren Landschaftsstreifen kombiniert ist. Dadurch entsteht eine symmetrische Gesamtanordnung relativ zur Flugbahnspur, welche die Symmetrieachse bildet. Damit ist es möglich, bei der Luftbildaufklärung eine hohe Gesamtstreifenbreite zu erzielen, wodurch die Aufklärungsleistung der Sensoreinrichtung nicht unbeträchtlich gesteigert werden kann. Eine erhöhte Gesamtstreifenbreite führt letztlich zu einer geringeren Flugdauer des Fluggeräts, da die Abbildung einer vorgegebenen Landschaft mit einer geringeren Anzahl von Überflügen bewerkstelligt werden kann. Damit lassen sich die Betriebskosten des Fluggeräts günstig beeinflussen.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Darstellung einer unsymmetrischen Gesamtstreifenbreite bei einer Sensoreinrichtung gemäß einer ersten Ausführungsform für die Luftbildaufklärung mit bemannten oder unbemannten Fluggeräten; und
- Fig. 2: eine schematische Darstellung einer symmetrischen Gesamtstreifenbreite bei einer Sensoreinrichtung gemäß einer anderen Ausführungsform.

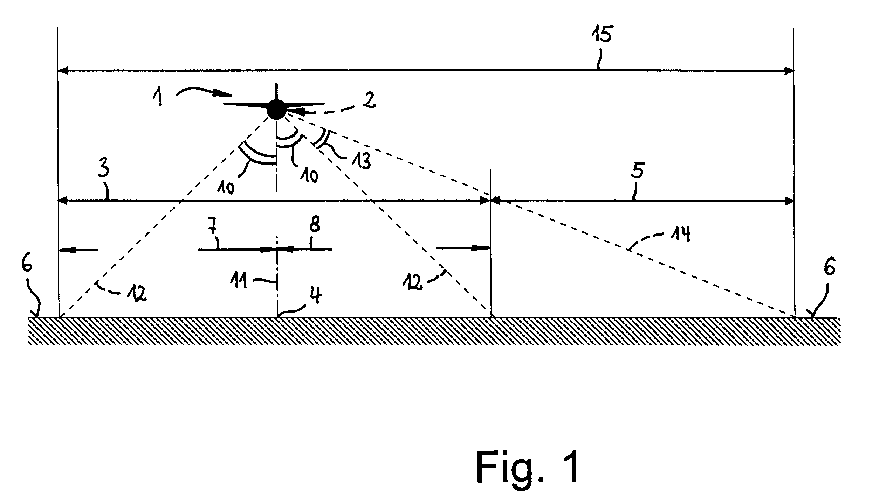

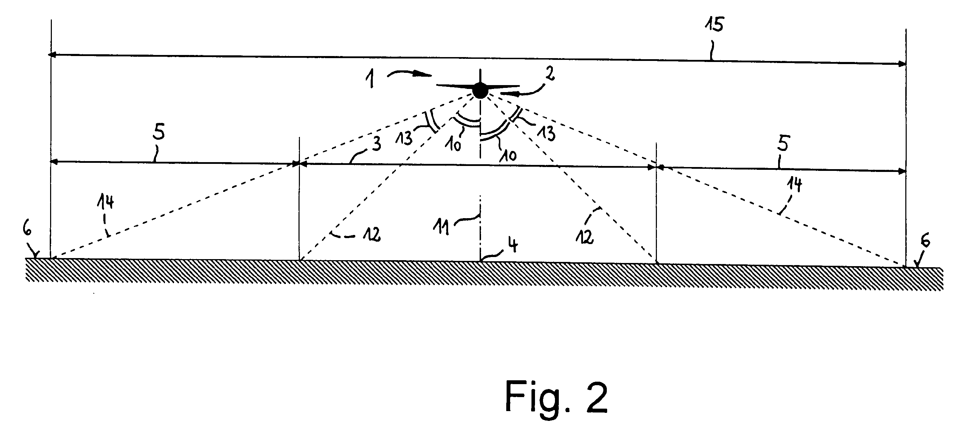

In Fig. 1 ist ein bemanntes oder unbemanntes Fluggerät 1 in einer Vorder- oder Rückansicht gezeigt. Das Fluggerät weist an Bord eine erfindungsgemäße Sensoreinrichtung 2 auf, die in den Fig. 1 und 2 nicht näher gezeigt ist. Die Sensoreinrichtung 2 ist ein sogenannter Allwetter-Kombinationssensor und hat ein nicht näher gezeigtes Radiometer zum Abbilden eines inneren Landschaftsstreifens 3 nahe der Flugbahnspur 4 und wenigstens ein Synthetik-Apertur-Radar, nachfolgend kurz SAR genannt, welches ebenfalls nicht näher gezeigt ist und zum Abbilden eines sich an den inneren Landschaftsstreifen 3 des Radiometers nach außen hin anschließenden, äußeren Landschaftsstreifens 5 dient.

Die Flugbahnspur 4 stellt dabei die lotrechte Projektion der Flugbahn vom Fluggerät 1 zur nicht näher dargestellten Landschaft 6 dar. Fig. 1 ist zu entnehmen, dass der innere Landschaftsstreifen 3 symmetrisch zur Flugbahnspur 4 ausgebildet ist und somit einen in Fig. 1 linken Abschnitt 7 und einen in Fig. 1 rechten Abschnitt 8 aufweist. Beide Abschnitte 7, 8 zusammen ergeben somit den inneren Landschaftsstreifen 3. Gemäß Fig. 1 liegt die Flugbahnspur 4 innerhalb des inneren Landschaftsstreifens 3, nämlich exakt zwischen dem linken Abschnitt 7 des inneren Landschaftsstreifens 3 und dem rechten Abschnitt 8 dieses Landschaftsstreifens. Der Öffnungswinkel 10 zur Abbildung des inneren Landschaftsstreifens 3 beträgt maximal ±60° um die Lotrichtung. Gemäß Fig. 1 ist dieser Winkel so definiert, dass er von der vertikalen Verbindungslinie 11 zwischen dem Fluggerät und der Flugbahnspur 4 auf der einen Seite und der jeweils äußeren Begrenzungslinie 12 des inneren Landschaftsstreifens 3 eingeschlossen ist.

Gemäß der in Fig. 1 dargestellten Ausführungsform der Erfindung grenzt der äußere Landschaftsstreifen 5 unmittelbar an den inneren Landschaftsstreifen 3 an, wobei gemäß Fig. 1 lediglich auf der rechten Seite ein äußerer Landschaftsstreifen 5 vorgesehen ist. Gemäß einer anderen, nicht näher gezeigten Ausführungsform der Erfindung ist es auch möglich, dass sich der äußere Landschaftsstreifen teilweise mit dem inneren Landschaftsstreifen überlappt.

Der Öffnungswinkel 13 zur Abbildung des äußeren Landschaftsstreifens 5 ist durch die in Fig. 1 rechts dargestellte Begrenzungslinie 12 des inneren Landschaftsstreifens 3 und die äußere Begrenzungslinie 14 eingeschlossen. Dieser Öffnungswinkel beträgt vorzugsweise zwischen +10° und +40° oder, sofern das SAR nicht wie in Fig. 1 nach rechts hin sondern nach links hin (in Fig. 1 nicht gezeigt) wirkend angeordnet ist, zwischen -10° und -40°. Vorzugsweise liegt der Öffnungswinkel 13 um 25°.

Sofern die gegenüber dem SAR geringere Bildauflösung des Radiometers in der Praxis ein Problem darstellt, kann der betreffende Landschaftsstreifen in einem parallel versetzten, zweiten Vorbeiflug durch das SAR in erhöhter Bildauflösung abgebildet werden. Die Breite von innerem Landschaftsstreifen 3 und äußerem Landschaftsstreifen 5 kann derart ausgebildet sein, dass sie nahezu identisch ist.

Fig. 1 verdeutlicht, dass die Gesamtstreifenbreite 15 zusammengesetzt ist aus dem inneren Landschaftsstreifen 3 und einem äußeren Landschaftsstreifen 5.

Eine besonders bevorzugte Ausführungsform der Erfindung ist in Fig. 2 dargestellt. Die Sensoreinrichtung 2 des Fluggeräts 1 hat hier zwei SAR, von denen der eine zur einen Seite von der Flugbahnspur, also beispielsweise nach links, und von denen der andere zur anderen Seite von der Flugbahnspur 4, also beispielsweise nach rechts, wirkend angeordnet ist. Im Gegensatz zur Darstellung gemäß Fig. 1 hat also die in Fig. 2 gezeigte Sensoreinrichtung 2 zwei SAR und damit zwei äußere Landschaftsstreifen 5, welche sich jeweils an die äußeren Begrenzungslinien 12 des inneren Landschaftsstreifens 3 anschließen. Der Darstellung der Fig. 2 ist zu entnehmen, dass sich bei dieser Ausführungsform die Gesamtstreifenbreite 15 aus einem inneren, zentralen Landschaftsstreifen 3 und zwei sich nach außen hin an diesen anschließenden, äußeren Landschaftsstreifen 5 zusammensetzt. Die in Fig. 2 gezeigte Anordnung ist daher symmetrisch in Bezug auf die Flugbahnspur 4 ausgebildet.

Es ist klar, dass auch im Fall der in Fig. 2 gezeigten Ausführungsform die äußeren Landschaftsstreifen 5 unmittelbar an den inneren Landschaftsstreifen 3 angrenzen oder, im Falle einer nicht gezeigten Ausführungsform, sich mit letzterem teilweise überlappen. Bei dieser Ausführungsform wird der Landschaftsbereich um die bodenseitige Flugbahnspur 4 in größerer Breite (Gesamtstreifenbreite) abgebildet als bei der Anordnung mit lediglich einem inneren Landschaftsstreifen und einem äußeren Landschaftsstreifen gemäß der Darstellung der Fig. 1. Bei sämtlichen Ausführungsformen sind sowohl das oder die SAR als auch das Radiometer in ihren jeweils optimalen Betriebsbereichen eingesetzt. Während eines Überflugs über ein Gebiet wird bei der in Fig. 2 gezeigten Ausführungsform eine maximal erhältliche Bildinformation gewonnen.

Der innere Landschaftsstreifen 3 kann auch Radiometer-Landschaftsstreifen sowie jeder äußere Landschaftsstreifen auch SAR-Landschaftsstreifen bezeichnet werden. Die Breite des inneren Landschaftsstreifens 3 entspricht somit der Radiometer-Streifenbreite, und die Breite jedes äußeren Landschaftsstreifens 5 entspricht der SAR-Streifenbreite. Gemäß einer bevorzugten Ausführungsform kann jeder äußere Landschaftsstreifen 5 eine Breite von 15 km aufweisen, wobei die Länge jeder äußeren Begrenzungslinie 14 im letztgenannten Fall um die 20 km beträgt.

Wie erwähnt, verläuft die Flugbahnspur 4 im Lotpunkt unter dem Fluggerät 1, wobei der Lotpunkt der Endpunkt der lotrechten Verbindungslinie 11 in der Landschaft, also beispielsweise am Boden, ist. Aus den vorstehenden Ausführungen folgt, dass das nicht näher gezeigte Radiometer einen um die Flugbahnspur symmetrischen Bodenbereich, nämlich den inneren Landschaftsstreifen 3, abbildet, während das nicht näher gezeigte SAR einen unsymmetrisch zur Flugbahnspur 4 verlaufenden Bereich, nämlich jeden äußeren Landschaftsstreifen 5, abbildet. Zwei SAR bilden hingegen einen symmetrisch zur Flugbahnspur 4 verlaufenden Geländestreifen ab, welcher sich aus den in Fig. 2 gezeigten, beiden äußeren Landschaftsstreifen 5 zusammensetzt.

Die erfindungsgemäße Sensoreinrichtung arbeitet vorzugsweise im elektrotechnischen Hochoder Höchstfrequenzbereich.

Es wird darauf hingewiesen, dass die erfindungsgemäße Sensoreinrichtung beispielsweise auch auf hoher See oder im Bereich von Binnenseen eingesetzt werden kann.

Damit ist eine Sensoreinrichtung geschaffen, welche zusammenhängende Landschaftsstreifen größerer Gesamtstreifenbreite mit hoher geometrischer Auflösung abbilden kann.

## Patentansprüche

1. Sensoreinrichtung für die Lufibildaufklärung mit bemannten oder unbemannten Fluggeräten (1), welche Sensoreinrichtung (2) an Bord des Fluggeräts (1) aufweist:
- ein Radiometer zum Abbilden eines inneren Landschaftsstreifens (3) nahe der Flugbahnspur (4) und
- wenigstens ein Synthetik-Apertur-Radar (SAR) zum Abbilden eines sich an den inneren Landschaftsstreifen (3) des Radiometers nach außen hin anschließenden, äußeren Landschaftsstreifens (5).

2. Sensoreinrichtung nach Anspruch 1, **dadurch gekennzeichnet, dass** der innere Landschaftsstreifen symmetrisch zur Flugbahnspur (4) ausgebildet ist.

3. Sensoreinrichtung nach Anspruch 1 oder 2, **dadurch gekennzeichnet, dass** die Flugbahnspur (4) innerhalb des inneren Landschaftsstreifens (3) liegt.

4. Sensoreinrichtung nach einem der vorhergehenden Ansprüche, **dadurch gekennzeichnet, dass** der Öffnungswinkel (10) zur Abbildung des inneren Landschaftsstreifens (3) maximal ±60° um die Lotrichtung beträgt.

5. Sensoreinrichtung nach einem der vorhergehenden Ansprüche, **dadurch gekennzeichnet, dass** der äußere Landschaftsstreifen (5) unmittelbar an den inneren Landschaftsstreifen (3) angrenzt oder sich mit letzterem teilweise überlappt.

6. Sensoreinrichtung nach einem der vorhergehenden Ansprüche, **dadurch gekennzeichnet, dass** der Öffnungswinkel (13) zur Abbildung des äußeren Landschaftsstreifens (5) zwischen +10° und +40° oder zwischen -10° und -40° beträgt.

7. Sensoreinrichtung nach einem der vorhergehenden Ansprüche, **dadurch gekennzeichnet, dass** zwei SAR vorgesehen sind, von denen der eine zur einen Seite von der Flugbahnspur (4) und von denen der andere zur anderen Seite von der Flugbahnspur (4) wirkend angeordnet ist.
